# EUROPEAN PATENT SPECIFICATION

(11) **EP 1 132 169 B1**
(45) Date of publication and mention of the grant of the patent: **28.07.2004**
(21) Application number: 01830151.5
(22) Date of filing: 06.03.2001
(51) Int. Cl.: B23P 15/00, E05D 15/52

(54) **A control unit for window frames, a method for production of the control unit and a machine which implements this method**
Steuereinheit für Fensterrahmen, Verfahren zu seiner Herstellung und Maschine zum Durchführen des Verfahrens
Unité de commande pour cadres de fenêtre, son procédé de fabrication et machine pour la mise en oeuvre de ce procédé

(30) Priority: 07.03.2000 IT BO000117
(43) Date of publication of application: 12.09.2001
(73) Proprietor: GSG International S.p.A., 40054 Budrio (Bologna) (IT)
(72) Inventor: Lambertini, Marco, 40068 San Lazzaro di Savena(Bologna) (IT)
(74) Representative: Lanzoni, Luciano

(56) References cited:
- EP-A- 0 560 017
- EP-A- 0 620 344
- EP-A- 0 736 656
- EP-A- 0 803 624
- DE-A- 3 831 529
- DE-A- 4 328 205
- DE-A- 19 906 758
- DE-B- 1 149 635
- FR-A- 2 664 932

## Description

The present invention relates to a control unit for tilt and turn window frames, a method for production of the control unit and a machine which implements this method.

At present, in the metal window frame fitting sector, on tilt and turn frames, the control unit allows the achievement of the mobile frame configurations (side-hung turning opening, tilting opening, closed) by operation of a handle on the outer surface of the mobile frame itself.

The control unit consists of a pair of rod segments (a flat section of a bar) connected by a connecting element or, as it is called in the sector, a drive unit, which is placed between the two segments and attached to them using pins, normally present on the drive unit, which may be inserted in the holes in the corresponding ends of the segments.

The two segments also have other seats or holes, made close to the ends opposite those attached to the drive unit, for their connection, during frame assembly, to the moving parts which open and close the mobile frame (push bolts or lock terminals) and to drive elements (such as corner drives) for mobile frame tilting opening.

The control unit structured in this way is obtained using a method according to which the rod segments are produced using a special cutting machine, starting with a section bar with a suitable cross-section which can be attached with a matching fit in a channel present on the frame section. The length of the segments depends on the dimensions (height) of the mobile frame in which they will be inserted. Once cut, the segments are machined to create the seats and/or holes mentioned, which are needed in order to connect them to the drive unit and to the opening/closing and drive parts.

Following this machining, the segments are assembled in succession, each being attached to the control elements until assembly on the section is complete.

Although the above-mentioned procedure is conventionally used by all metal frame manufacturers, it has disadvantages due to the complexity of the machining required on the rod segments and the numerous parts of which the control unit assembly consists, which require time and experience for their assembly. Thus, adding together the large number of parts in the unit, the machining required on the rod segments and the assembly time needed, the total represents a significant part of the final cost of the whole frame.

Document FR-A-2 664 932 discloses a control unit for window frames with simple side hung turning opening comprising a fixed frame and mobile frame, having a height and opening in one configuration; the control unit comprising, sliding in a channel in one of the uprights of the section forming the mobile frame, drive means which may be attached to a control handle mounted on the mobile frame and means for transmitting a sliding movement by the drive means in both directions and along the channel, obtained by movement of the handle; the transmission means being attached to the drive means and, respectively, to connecting elements and/or control elements for the mobile frame relative to the fixed frame, allowing the mobile frame to move to the opening or closing configurations, the control unit comprising a single rod extending substantially the height of the mobile frame, it being possible to insert the rod in the channel, the rod forming the means which transmit the sliding movement.

Document EP-A-0 803 624 discloses a method for producing a control unit for window frames with simple side hung turning opening, comprising a fixed frame and mobile frame, having a height and opening in one configuration; the control unit comprising, sliding in a channel in one of the uprights of the section forming the mobile frame, drive means which may be attached to a control handle mounted on the mobile frame , and means for transmitting a sliding movement by the drive means in both directions and along the channel obtained by movement of the handle; the transmission means being attached to the drive means and respectively, to connecting elements and/or control elements for the mobile frame relative to the fixed frame, allowing the mobile frame to move to the opening or closing configurations, the method comprising the following steps, which may be simultaneous or successive:
feeding a section bar with a cross-section which makes a matching fit with the channel in an operating direction;
performing a plurality of machining and/or forming operations on the section bar using means designed to make a series of features in the shape and/or profile of the section bar, for forming at least the drive means and part of the control elements;
cutting from the section bar of a portion, comprising the above mentioned features, which forms the single rod whose length is substantially equal to the height of the mobile frame.

Document DE-A-43 28 205 discloses a machine suitable for producing control units for window frames as described above, according to the preamble of claim 12.

The aim of the present invention is, therefore, to overcome the above-mentioned disadvantages by providing a control unit whose structure is extremely simplified, thus facilitating assembly and so making the entire unit more economically viable.

Another aim of the present invention is to provide a method for production of the control unit which is extremely fast and precise and a machine which implements this method.

Accordingly, the present invention achieves the preset aims with a control unit for tilt and turn window frames, appended claims 1 to 6.

The present aims are also accordingly achieved by a method for production of the control unit comprising the steps, according to appended claims 7 to 11. This method, again in accordance with the present invention, is implemented by a machine according to appended claims 12 to 18.

The technical features of the present invention, in accordance with the above-mentioned aims, are set out in the claims herein and the advantages more clearly illustrated in the detailed description which follows, with reference to the accompanying drawings, which illustrate a preferred embodiment without limiting the scope of application, and in which:
- Figure 1 is a schematic front view of a metal frame in the side-hung turning opening configuration, equipped with a control unit, in accordance with the present invention;
- Figures 2 and 3 are respectively a top plan view and a side view of the control unit disclosed, with some parts cut away to better illustrate others;
- Figures 4 and 5 are perspective views of details of the control unit illustrated in Figure 2;
- Figure 6 is a diagram of a machine which produces the control unit illustrated in the previous figures;
- Figure 7 is a detail of the machine illustrated in Figure 6.

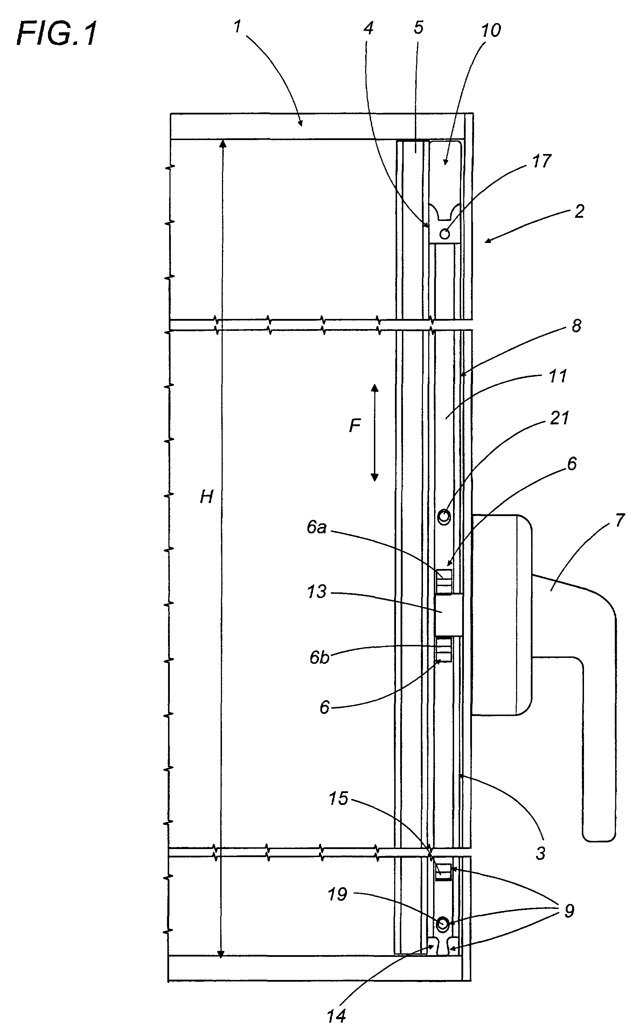

With reference to the accompanying drawings and in particular Figure 1, the control unit disclosed is fitted on metal frames of the type comprising a fixed frame 1 and a mobile frame 2, with height H, with both side-hung turning and tilting opening.

The control unit, labelled 3 as a whole, fits in such a way that it can slide inside a channel 4 on one of the uprights 5 of the section (which determines the height H referred to above) and forms part of the mobile frame 2.

This control unit 3 comprises drive means 6 which may be attached to a control handle 7 mounted on the mobile frame 2 and which operates a control lever 13, and means 8 for transmitting a sliding movement by the drive means 6 in both directions and along the channel 4 (see arrow F in Figure 1), obtained by movement of the handle 7.

To obtain the sliding movements, the transmission means 8 are attached to the drive means 6 and, respectively, to elements 9 for connecting and/or elements 10 for moving the mobile frame 2 relative to the fixed frame 1, in order to allow achievement of the mobile frame 2 opening or closing configurations.

As shown in Figures 1, 2 and 3, the control unit 3 comprises a single rod 11 which extends substantially the height H of the mobile frame 2, forming the means 8 which transmit the sliding movement, the drive means 6 and at least part of the control elements 10.

The single rod 11 also has means 12 for connection to other mobile frame 2 control elements 10.

Thus, a single part is used to incorporate all of the basic parts. That is to say, the drive means 6 and most of the control elements 10 and, as indicated below, the seats which hold the connecting elements 9, for correct transmission of the control commands for opening and closing the mobile frame 2.

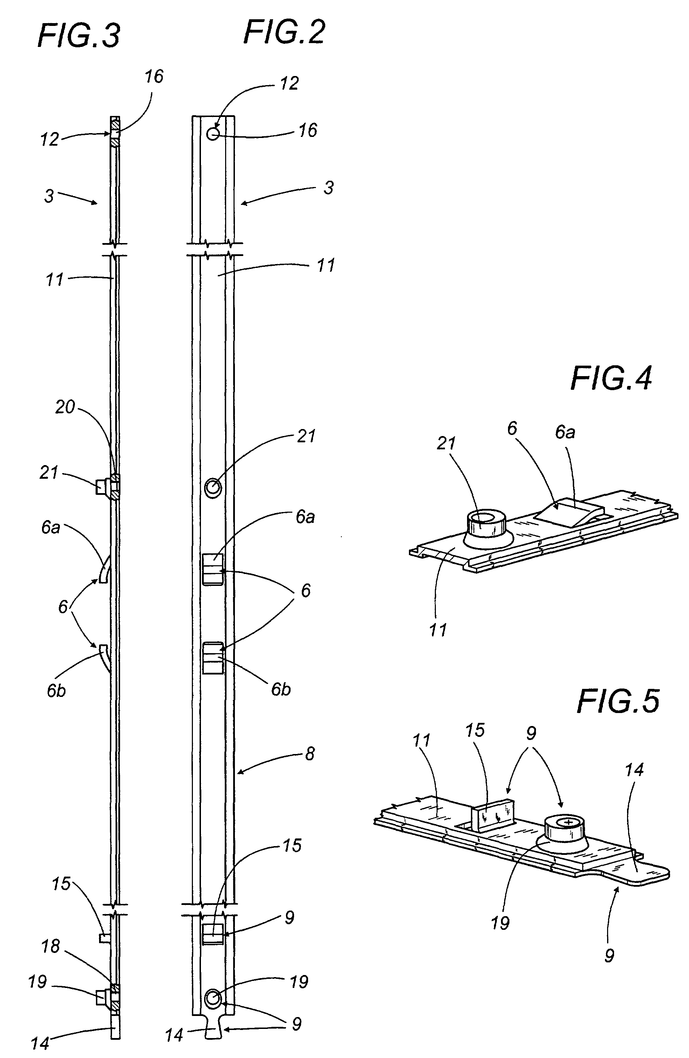

Looking more closely at the technical details (see Figures 2, 3 and 4), the drive means 6 comprise a pair of first projections 6a and 6b, opposite one another, consisting of portions of the surface of the single rod 11 and forming elements which intercept the handle 7 control lever 13 in both directions.

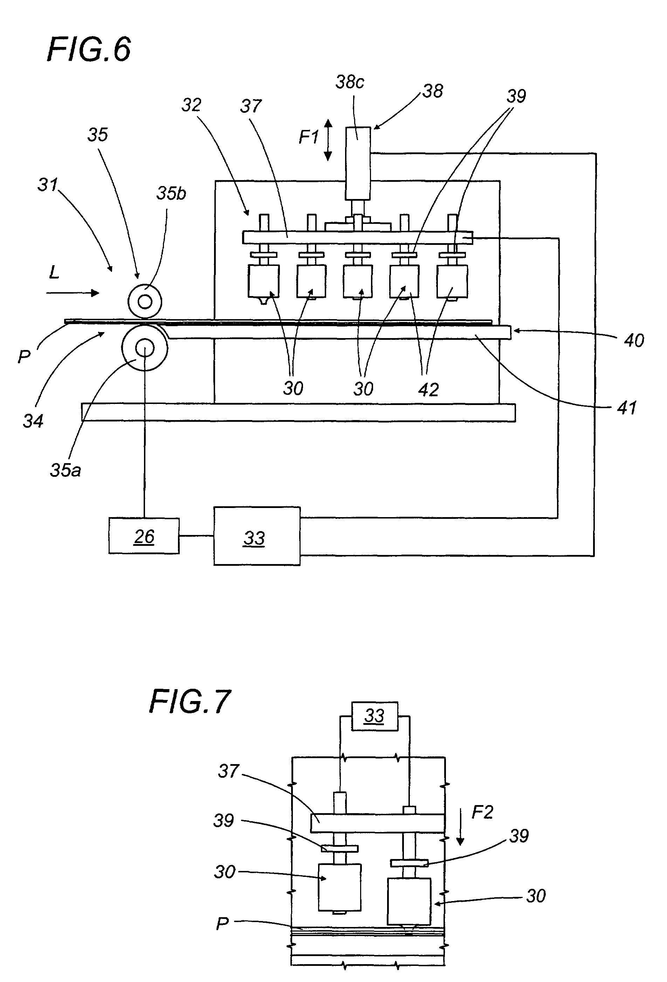

Figure 5 shows one of the ends of the single rod 11, with tapering 14 of the cross-section of the rod 11, designed to form a control end piece, for rotation, for the mobile frame 2, when it is in the tilting opening configuration, and forming one of the control elements 10. Basically, the taper 14 consists of two arced notches, positioned opposite one another, at the end of the rod 11, forming a sort of double pivot zone for the mobile frame 2.

Figure 5 also shows how, again close to the tapered end 14, the single rod 11 has a second projection 15 consisting of a portion of the surface of the single rod 11 designed to form another control element 10 needed for mobile frame 2 tilting opening.

In order to allow connection of the single rod 11 to other control elements 10, the rod 11 has a first hole 16 at the end opposite that with the taper 14, forming the above-mentioned means 12 for connection to control elements 10 which, in the embodiment illustrated, consist of a corner drive with a first pin 17 for connection to the rod 11.

The single rod 11 has a second hole 18 between the second projection 15 and the tapered end 14, designed to allow the insertion on the single rod 11 of a second pin 19, forming one of the connecting elements 9, for making contact with and holding the mobile frame 2 against the fixed frame 1 when the window frame is in the closed configuration.

If the height of the mobile frame 2 is considerable, the single rod 11 may have a third hole 20, close to the pair of first projections 6a and 6b, designed to allow the insertion of a third pin 21 for making contact with and holding the mobile frame 2 against the fixed frame 1 when the window frame is in the closed configuration.

In order to make the control unit 3 described above, a method is used which comprises the following steps, to be carried out simultaneously or in succession:
- feeding a section bar P with a cross-section which makes a matching fit with the channel 4 in an operating direction L (see Figure 6);
- performing a plurality of machining operations on the section bar P, using means 30 (described below), designed to make a series of features in the shape and/or profile of the section bar P, to form at least the drive means 6 and part of the control elements 10;
- cutting from the section bar P of a portion, comprising the above-mentioned features, which forms the single rod 11 whose length is substantially equal to the height H of the mobile frame 2.

Upon completion of these steps, the basic control unit 3 is obtained, although during machining of the section bar, a first boring operation is preferably carried out, to make at least the first hole 16 for connecting other control elements 10.

More specifically, the main machining operations include the following:
- a cutting operation, on the surface of the section bar P, to produce the pair of first projections 6a and 6b, opposite one another, which form the drive means 6;
- another cutting operation on the surface of the section bar P, for forming the second projection 15 which is one of the control elements 10;
- another cutting operation at one end of the section bar P, for tapering 14 the end so as to create another control element 10.

In the embodiment illustrated and, preferably during the machining of the single rod 11, another boring operation is carried out. In addition to the first hole 16, this allows the creation of the second and third holes 18 and 20 for connection of the first and second pins 19 and 21, which can then be attached to the rod 11.

This method may be implemented using a machine, illustrated in the diagram in Figure 6, comprising:
- a first station 31, which feeds a continuous section bar P in the operating direction L (see arrow L);
- a second station 32, for machining the section bar P, equipped with a plurality of machining units 30 designed to allow simultaneous or successive operations for making a series of features in the shape and/or profile of the section bar P, to form the drive means 6 and part of the control elements 10, and cutting to size of the section bar P to form the single rod 11 equipped with the drive means 6 and part of the control elements 10;
- a control unit 33 for the feed station 31 and the machining units 30, designed to activate the machining units 30 according to the final length of the single rod 11, the type of machining to be done and section bar P feed in the second station 32.

Specifically, the first station 31, located upstream of the second station 32 relative to the operating direction L, comprises a section bar P infeed channel 34 and a unit 35 for the bilateral pickup and feed of the section bar P connected to the control unit 33.

The pickup unit 35 may consist of a pair of rollers 35a and 35b positioned opposite one another and in contact with both sides of the section bar P.

One of the rollers, 35a, is motor-powered and is connected to a counting element 26 (for example, an encoder), which is controlled directly by the control unit 33, for checking the length of the section bar P fed in.

The second station 32, for machining the section bar P, may comprise a support frame 37 for the machining units 30, located above the section bar P fed in and positioned one after another.

This frame 37 may be controlled by means 38 (for example a cylinder 38c) which move it between a non-operating position, in which the units 30 are distanced from the section bar P (see Figure 6), and an operating position, in which the units 30 are close to the section bar P (see arrow F1 and Figure 7).

Between the frame 37 and each of the units 30, there may be an activation element 39, controlled by the control unit 33, and designed to allow the unit 30 to perform another operating stroke so that, when the frame 37 is in the operating position, the machining unit makes contact with the section bar P (see arrow F2 in Figure 7). This activation element 39 for each machining unit 30 may be magnetic and activated by means of the unit 33 according to a preset program.

Returning to Figure 6, the second station 32 may comprise a support and sliding base 40, opposite the machining units 30, consisting of a support track 41 for the section bar P. This track is designed to form an element which opposes the machining units 30 during the cutting downstroke.

In particular, each of the machining units 30 (in Figure 6, for example, five units are illustrated, although this number may vary according to requirements) consists of a cutting head 42 shaped in such a way as to produce the single feature in the shape and/or profile of the section bar P, bore a hole in it, or cut the section bar.

The control unit 33 may consist of a microprocessor unit which the operator may programme using a keyboard according to the various machining requirements and the length of the rod 11.

The control unit, the method for producing the unit and the machine described above, therefore, fulfil the preset aims thanks to the rationalisation and unification of a set of elements which, in the known embodiments, are separate and are made with successive machining operations.

This unification of the unit in a single rod allows more rapid assembly on the frame by the fitter without particular pre-fitting of other elements, with the exception of the single operation for fitting the pins which make contact with and hold the mobile frame closed against the fixed frame. In this way, the fitter simply inserts the rod in the channel in the upright, attaches the handle lever between the two central projections and connects the upper end of the rod to the corner drive (if present).

The steps of the method for producing the rod are significantly simplified and, partly thanks to the machine which implements the method, allow rapid setting of unit dimensions and rational production of all elements on the rod, thus further speeding up frame assembly.

All of this reduces the overall costs of the frame and the related warehouse costs which conventionally have a greater effect on costs, due to the high number of elements needed to produce the unit.

## Claims

1. A control unit for tilt and turn window frames comprising a fixed frame (1) and mobile frame (2), having a height (H); the control unit (3) comprising, sliding in a channel (4) in one of the uprights (5) of the section forming the mobile frame (2), drive means (6) which may be attached to a control handle (7) mounted on the mobile frame (2), and means (8) for transmitting a sliding movement by the drive means (6) in both directions and along the channel (4), obtained by movement of the handle (7); the transmission means (8) being attached to the drive means (6) and, respectively, to connecting elements (9) and/or control elements (10) for the mobile frame (2) relative to the fixed frame (1), allowing the mobile frame (2) to move to the opening or closing configurations, the control unit comprising a single rod (11) extending substantially the height (H) of the mobile frame (2), it being possible to insert the rod in the channel (4), the rod forming the means (8) which transmit the sliding movement, the drive means (6) comprising a pair of first projections (6a, 6b), opposite one another, being formed from portions of the surface of the single rod (11) and forming elements which intercept the handle (7) control lever (13) in both directions and in that, at least at one end, the single rod (11) has a taper (14) in its cross-section, being designed to create a connection for rotation of the mobile frame (2) in a tilting opening configuration and forming part of the control elements (10).

2. The unit according to claim 1, **characterised in that** the single rod (11) is equipped with means (12) for connecting the mobile frame (2) to other control elements (10).

3. The unit according to claim 1, **characterised in that**, at least at the tapered end (14), the single rod (11) has a second projection (15) on a portion of the surface of the single rod (11), being designed to form a contact element, when the mobile frame (2) is in a tilting opening configuration and constituting one of the control elements (10).

4. The unit according to claims 1 to 3, **characterised in that** the single rod (11) has at least one first hole (16) at the end opposite the taper (14) forming the means (12) for connecting the mobile frame (2) to other control elements (10), comprising a first connecting pin (17).

5. The unit according to claims 1 to 4, **characterised in that** the single rod (11) has a second hole (18) between the second projection (15) and the tapered end (14), being designed to allow the insertion of a second pin (19) which is one of the connecting elements (9) on the single rod (11).

6. The unit according to claims 1 to 5, **characterised in that** the single rod (11) has a third hole (20), close to the pair of first projections (6a, 6b), being designed to allow the insertion of a third pin (21) which is another connecting element (9) on the single rod (11).

7. A method for producing a control unit for tilt and turn window frames of the type comprising a fixed frame (1) and mobile frame (2), having a height (H); the control unit (3) comprising, sliding in a channel (4) in one of the uprights (5) of the section forming the mobile frame (2), drive means (6) which may be attached to a control handle (7) mounted on the mobile frame (2), and means (8) for transmitting a sliding movement by the drive means (6) in both directions and along the channel (4), obtained by movement of the handle (7); the transmission means (8) being attached to the drive means (6) and, respectively, to connecting elements (9) and/or control elements (10) for the mobile frame (2) relative to the fixed frame (1), allowing the mobile frame (2) to move to the opening or closing configurations, the method comprising the following steps, which may be simultaneous or successive:
- feeding a section bar (P) with a cross-section which makes a matching fit with the channel (4) in an operating direction (L);
- performing a plurality of machining operations on the section bar (P) using means (30) designed to make a series of features in the shape and/or profile of the section bar (P), for forming at least the drive means (6) and part of the control elements (10);
- cutting from the section bar (P) of a portion, comprising the above-mentioned features, which forms the single rod (11) whose length is substantially equal to the height (H) of the mobile frame 2; the machining step comprising an operation for cutting the surface of the section bar (P), producing a pair of first projections (6a, 6b) which are opposite one another and form the drive means (6), and an operation for cutting one end of the section bar (P), being designed to form a taper (14) at said end and form one of the control elements (10).

8. The method according to claim 7, **characterised in that** the step of machining the single rod (11) comprises at least one boring operation, to produce at least one seat (16) for connecting another control element (10).

9. The method according to claim 7, **characterised in that** the machining step comprises an operation for cutting the surface of the section bar (P), forming a second projection (15) which is one of the control elements (10).

10. The method according to claims 7 and 8, **characterised in that** the machining step comprises another boring operation for making at least one seat (18) for the insertion of a contact element or pin (19) which can be attached to the single rod (11).

11. The method according to claims 7 and 8, **characterised in that** the machining step comprises another boring operation for making at least one seat (20) for the insertion of a contact element or pin (21) which can be attached to the single rod (11).

12. A machine for producing a control unit for tilt and turn window frames of the type comprising a fixed frame (1) and mobile frame (2), having a height (H); the control unit (3) comprising, sliding in a channel (4) in one of the uprights (5) of the section forming the mobile frame (2), drive means (6) which may be attached to a control handle (7) mounted on the mobile frame (2), and means (8) for transmitting a sliding movement by the drive means (6) in both directions and along the channel (4), obtained by movement of the handle (7); the transmission means (8) being attached to the drive means (6) and, respectively, to connecting elements (9) and/or control elements (10) for the mobile frame (2) relative to the fixed frame (1), allowing the mobile frame (2) to move to the opening or closing configurations, the machine comprising:
- a first station (31), for feeding a section bar (P) in an operating direction (L);
- a second station (32), for machining the section bar (P), equipped with a plurality of machining units (30);
- a control unit (33) for the feed station (31) and the machining units (30), for activating the machining units (30) according to the final length of the single rod (11) obtained from the section bar, the type of machining to be done and section bar (P) feed in the second station (32); **characterised in that** the machining units (30) are located above the section bar (P) fed in and positioned one after another and designed to allow simultaneous or successive operations for making a series of features in the shape and/or profile of the section bar (P), for forming the drive means (6) as a pair of first projections (6a, 6b), opposite one another and part of the control elements (10) as a taper (14) in the cross section of at least one end of the single rod and cutting to size of the section bar (P) to form the single rod (11) equipped with the drive means (6) and the part of the control elements (10).

13. The machine according to claim **12**, **characterised in that** the first station (31) comprises an infeed channel (34) for the section bar (P) and a unit (35) for the bilateral pickup and feed of the section bar (P), being connected to the control unit (33).

14. The machine according to claim 12, **characterised in that** the bilateral pickup unit (35) consists of a pair of rollers (35a, 35b), being opposite one another and on both sides of the section bar (P); at least one of the rollers (35a, 35b) being motor-powered and connected to a counting element (36) controlled by the control unit (33).

15. The machine according to claim 12, **characterised in that** the second station (32) for machining the section bar (P) comprises a support frame (37) for the machining units (30); the frame (37) being controlled by means (38) which move it between a non-operating position, in which the units (30) are distanced from the section bar (P), and an operating position, in which the units (30) are close to the section bar (P); between the frame (37) and each of the units (30) there being an activation element (39), controlled by the control unit (33), which allows the unit (30) to perform another operating stroke so that, when the frame (37) is in the operating position, the machining unit makes contact with the section bar (P).

16. The machine according to claim 15, **characterised in that** the activation element (39) of each machining unit (30) is of the magnetic type.

17. The machine according to claims 12 to 15, **characterised in that** the second station (32) comprises a support base (40) opposite the machining units (30), consisting of a support track (41) for the section bar (P); the track being designed to form an element which opposes the machining units (30).

18. The machine according to claim 12, **characterised in that** each of the machining units (30) consists of a cutting head (42) shaped in such a way as to produce a feature in the shape and/or profile of the section bar (P) or to cut the section bar.

## Patentansprüche

1. Steuereinheit für Kipp- und Drehfenster, enthaltend einen feststehenden Rahmen (1) und einen beweglichen Rahmen (2) von einer Höhe (H); wobei die Steuereinheit (3), gleitend in einem Kanal (4) in einem der Pfosten (5) des den beweglichen Rahmen (2) bildenden Abschnitts, Antriebsmittel (6) enthält, welche an einen Betätigungsgriff (7) angeschlossen werden können, montiert an dem beweglichen Rahmen (2), und Mittel (8) zum Übertragen einer Gleitbewegung durch die Antriebsmittel (6) in beiden Richtungen und entlang dem Kanal (4), erzeugt durch die Bewegung des Griffes (7); wobei die Übertragungsmittel (8) an die Antriebsmittel (6) und jeweils an Verbindungselemente (9) und/oder Betätigungselemente (10) für den beweglichen Rahmen (2) im Verhältnis zu dem feststehenden Rahmen (1) angeschlossen sind und es dem beweglichen Rahmen (2) erlauben, sich in die geöffneten oder geschlossenen Konfigurationen zu bewegen, wobei die Steuereinheit eine einzige Stange (11) enthält, die sich im wesentlichen in der Höhe (H) des beweglichen Rahmens (2) erstreckt, mit der Möglichkeit, die Stange in den Kanal (4) einzuschieben, und wobei die Stange die Mittel (8) bildet, welche die Gleitbewegung übertragen, wobei die Antriebsmittel (6) ein Paar von ersten, sich einander gegenüberliegenden Vorsprüngen (6a, 6b) aufweisen, ausgebildet aus den Abschnitten der Oberfläche der einzigen Stange (11) und Elemente bildend, welche den Betätigungshebel (13) des Griffes (7) in beiden Richtungen abfangen, und wenigstens ein Ende der einzigen Stange (11) eine Verjüngung (14) im Querschnitt aufweist, die dazu bestimmt ist, eine Verbindung zum Drehen des beweglichen Rahmens (2) in eine Konfiguration der Kippöffnung herzustellen und Teil der Betätigungselemente (10) ist.

2. Einheit nach Patentanspruch 1, **dadurch gekennzeichnet, dass** die einzige Stange (11) mit Mitteln (12) zum Verbinden des beweglichen Rahmens (2) mit anderen Betätigungselementen (10) versehen ist.

3. Einheit nach Patentanspruch 1, **dadurch gekennzeichnet, dass** wenigstens an dem verjüngten Ende (14) die einzige Stange (11) einen zweiten Vorsprung (15) an einem Abschnitt der Oberfläche der einzigen Stange (11) aufweist, der dazu bestimmt ist, ein Kontaktelement zu bilden, wenn der beweglichen Rahmen (2) sich in einer Konfiguration der Kippöffnung befindet, und der eins der Betätigungselemente (10) bildet.

4. Einheit nach den Patentansprüchen von 1 bis 3, **dadurch gekennzeichnet, dass** die einzige Stange (11) wenigstens eine erste Bohrung (16) an dem Ende entgegengesetzt zu der Verjüngung (14) aufweist, welche Mittel (12) zum Anschliessen des beweglichen Rahmens (2) an andere Betätigungselemente (10) bildet, enthaltend einen ersten Verbindungszapfen (17).

5. Einheit nach den Patentansprüchen von 1 bis 4, **dadurch gekennzeichnet, dass** die einzige Stange (11) eine zweite Bohrung (18) zwischen dem zweiten Vorsprung (15) und dem verjüngten Ende (14) aufweist, die dazu bestimmt ist, das Einsetzen eines zweiten Zapfens (19) zu erlauben, welcher eines der Verbindungselemente (9) an der einzigen Stange (11) ist.

6. Einheit nach den Patentansprüchen von 1 bis 5, **dadurch gekennzeichnet, dass** die einzige Stange (11) eine dritte Bohrung (20) dicht an dem Paar von ersten Vorsprüngen (6a, 6b) aufweist, die dazu bestimmt ist, das Einsetzen eines dritten Zapfens (21) zu erlauben, welcher ein anderes Verbindungselement (9) an der einzigen Stange (11) ist.

7. Verfahren zur Herstellung einer Steuereinheit für Kippund Drehfenster vom Typ enthaltend einen feststehenden Rahmen (1) und einen beweglichen Rahmen (2) von einer Höhe (H); wobei die Steuereinheit (3), gleitend in einem Kanal (4) in einem der Pfosten (5) des den beweglichen Rahmen (2) bildenden Abschnitts, Antriebsmittel (6) enthält, welche an einen Betätigungsgriff (7) angeschlossen werden können, montiert an dem beweglichen Rahmen (2), und Mittel (8) zum Übertragen einer Gleitbewegung durch die Antriebsmittel (6) in beiden Richtungen und entlang dem Kanal (4), erzeugt durch die Bewegung des Griffes (7); wobei die Übertragungsmittel (8) an die Antriebsmittel (6) und jeweils an Verbindungselemente (9) und/oder Betätigungselemente (10) für den beweglichen Rahmen (2) im Verhältnis zu dem feststehenden Rahmen (1) angeschlossen sind und es dem beweglichen Rahmen (2) erlauben, sich in die geöffneten oder geschlossenen Konfigurationen zu bewegen, wobei das Verfahren die folgenden Phasen enthält, die gleichzeitig oder aufeinanderfolgend ausgeführt werden können:
- Zuführen einer Profilstange (P) mit einem Querschnitt, der sich in Betriebsrichtung (L) passrecht in den Kanal (4) einfügt;
- Ausführen einer Anzahl von Bearbeitungen an der Profilstange (P) unter Verwendung von Mitteln (30), dazu bestimmt, eine Reihe von Besonderheiten in der Form und/oder dem Profil der Profilstange (P) anzubringen, um wenigstens die Antriebsmittel (6) und einen Teil der Betätigungselemente (10) herzustellen;
- Ablängen von der Profilstange (P) eines die obigen Besonderheiten enthaltenden Abschnittes, welcher die einzige Stange (11) bildet, deren Länge im wesentlichen der Höhe (H) des beweglichen Rahmens (2) entspricht; wobei die Bearbeitungsphase einen Arbeitsgang zum Schneiden der Oberfläche der Profilstange (P) enthält, bei dem ein Paar von ersten Vorsprüngen (6a, 6b) hergestellt wird, welche sich einander gegenüberliegen und die Antriebsmittel (6) bilden, und einen Arbeitsgang zum Schneiden eines Endes der Profilstange (P), dazu bestimmt , an dem genannten Ende eine Verjüngung (14) und eins der Betätigungselemente (10) zu bilden.

8. Verfahren nach Patentanspruch 7, **dadurch gekennzeichnet, dass** die Phase der Bearbeitung der einzigen Stange (11) wenigstens einen Bohrvorgang enthält, um wenigstens einen Sitz (16) für den Anschluss eines anderen Betätigungselementes (10) herzustellen.

9. Verfahren nach Patentanspruch 7, **dadurch gekennzeichnet, dass** die Bearbeitungsphase einen Arbeitsgang zum Schneiden der Oberfläche der Profilstange (P) enthält, bei welchem ein zweiter Vorsprung (15) hergestellt wird, welcher eins der Betätigungselemente (10) ist.

10. Verfahren nach den Patentansprüchen 7 und 8, **dadurch gekennzeichnet, dass** die Bearbeitungsphase einen anderen Bohrvorgang enthält, um wenigstens einen Sitz (18) zum Einschieben eines Kontaktelementes oder Zapfens (19) herzustellen, welcher an die einzige Stange (11) angeschlossen werden kann.

11. Verfahren nach den Patentansprüchen 7 und 8, **dadurch gekennzeichnet, dass** die Bearbeitungsphase einen anderen Bohrvorgang enthält, um wenigstens einen Sitz (20) zum Einschieben eines Kontaktelementes oder Zapfens (21) herzustellen, welcher an die einzige Stange (11) angeschlossen werden kann.

12. Maschine zur Herstellung einer Steuereinheit für Kippund Drehfenster vom Typ enthaltend einen feststehenden Rahmen (1) und einen beweglichen Rahmen (2) mit einer Höhe (H); wobei die Steuereinheit (3), gleitend in einem Kanal (4) in einem der Pfosten (5) des den beweglichen Rahmen (2) bildenden Abschnitts, Antriebsmittel (6) enthält, welche an einen Betätigungsgriff (7) angeschlossen werden können, montiert an dem beweglichen Rahmen (2), und Mittel (8) zum Übertragen einer Gleitbewegung durch die Antriebsmittel (6) in beiden Richtungen und entlang dem Kanal (4), erzeugt durch die Bewegung des Griffes (7); wobei die Übertragungsmittel (8) an die Antriebsmittel (6) und jeweils an Verbindungselemente (9) und/oder Betätigungselemente (10) für den beweglichen Rahmen (2) im Verhältnis zu dem feststehenden Rahmen (1) angeschlossen sind und es dem beweglichen Rahmen (2) erlauben, sich in die geöffneten oder geschlossenen Konfigurationen zu bewegen, wobei die Maschine wie folgt enthält:
- eine erste Station (31) zum Zuführen einer kontinuierlichen Profilstange (P) in einer Arbeitsrichtung (L);
- eine zweite Station (32) zum Bearbeiten der Profilstange (P), ausgestattet mit einer Anzahl von Bearbeitungseinheiten (30);
- eine Steuereinheit (33) für die Zuführstation (31) und die Bearbeitungseinheiten (30), dazu bestimmt, die Bearbeitungseinheiten (30) entsprechend der endgültigen, von der Profilstange abgetrennten Länge der einzigen Stange (11), der Art der vorzunehmenden Bearbeitung und dem von der Profilstange (P) in der zweiten Station (32) ausgeführten Vorschub zu aktivieren; **dadurch gekennzeichnet, dass** die Bearbeitungseinheiten (30) oberhalb der zugeführten Profilstange (P) angeordnet und eine hinter der anderen positioniert und dazu bestimmt sind, gleichzeitig oder aufeinanderfolgend Arbeitsgänge zum Anbringen einer Reihe von Besonderheiten in der Form und/oder dem Profil der Profilstange (P) auszuführen, um die Antriebsmittel (6) als ein Paar von ersten, sich einander gegenüberliegenden Vorsprüngen (6a, 6b) und einen Teil der Betätigungselemente (10) als eine Verjüngung (14) im Querschnitt an wenigstens einem Ende der einzigen Stange herzustellen, und die Profilstange (P) massgerecht abzulängen, um die einzige Stange (11) zu bilden, die mit den Antriebsmitteln (6) und einem Teil der Betätigungselemente (10) versehen ist.

13. Maschine nach Patentanspruch 12, **dadurch gekennzeichnet, dass** die erste Station (31) einen Zuführkanal (34) für die Profilstange (P) und eine Einheit (35) zum beiderseitigen Aufnehmen und Zuführen der Profilstange (P) enthält, angeschlossen an die Steuereinheit (33).

14. Maschine nach Patentanspruch 12, **dadurch gekennzeichnet, dass** die Einheit (35) zum beiderseitigen Aufnehmen aus einem Paar von Rollen (35a, 35b) besteht, die sich einander gegenüberliegend an beiden Seiten der Profilstange (P) angeordnet sind; wobei wenigstens eine der Rollen (35a, 35b) angetrieben und an ein Zählelement (36) angeschlossen ist, gesteuert durch die Steuereinheit (33).

15. Maschine nach Patentanspruch 12, **dadurch gekennzeichnet, dass** die zweite Station (32) zum Bearbeiten der Profilstange (P) einen Trägerrahmen (37) für die Bearbeitungseinheiten (30) enthält; wobei der Rahmen (37) durch Mittel (38) gesteuert wird, welche ihn zwischen einer Ruhestellung, in welcher die Einheiten (30) von der Profilstange (P) entfernt sind, und einer Arbeitsposition, in welcher die Einheiten (30) an die Profilstange (P) herangeführt sind, bewegen; wobei sich zwischen dem Rahmen (37) und einer jeden der Einheiten (30) ein Aktivierungselement (39) befindet, gesteuert durch die Steuereinheit (33), welches es der Einheit (30) erlaubt, einen anderen Arbeitshub auszuführen, so dass, wenn der Rahmen (37) sich in der Arbeitsposition befindet, die Bearbeitungseinheit Kontakt mit der Profilstange (P) hat.

16. Maschine nach Patentanspruch 15, **dadurch gekennzeichnet, dass** das Aktivierungselement (39) einer jeden Bearbeitungseinheit (30) von magnetischem Typ ist.

17. Maschine nach den Patentansprüchen von 12 bis 15, **dadurch gekennzeichnet, dass** die zweite Station (32) eine den Bearbeitungseinheiten (30) gegenüberliegende Auflagebasis (40) enthält, bestehend aus einer Stützschiene (41) für die Profilstange (P); wobei die Schiene dazu bestimmt ist, ein Element zu bilden, welches den Bearbeitungseinheiten (30) entgegenwirkt.

18. Maschine nach Patentanspruch 12, **dadurch gekennzeichnet, dass** jede der Bearbeitungseinheiten (30) aus einem Schneidkopf (42) besteht, der auf solche Weise ausgebildet ist, dass er eine Besonderheit in der Form und/oder dem Profil der Profilstange (P) herstellt oder die Profilstange ablängt.

## Revendications

1. Une unité de commande pour cadres de fenêtre oscillo-battante comprenant un dormant (1) et un ouvrant (2) de hauteur (H) ; l'unité de commande (3) comprenant, coulissant dans un canal (4) réalisé dans un des montants (5) du profilé formant l'ouvrant (2), des moyens d'entraînement (6) qui peuvent être associés à une poignée de commande (7) montée sur l'ouvrant (2), et des moyens (8) destinés à transmettre, par le biais d'un mouvement de la poignée (7), un mouvement de coulissement dans les deux sens et le long du canal (4) des moyens d'entraînement (6) ; les moyens de transmission (8) étant associés aux moyens d'entraînement (6) et, respectivement, à des éléments de liaison (9) et/ou des éléments (10) de manoeuvre de l'ouvrant (2) par rapport au dormant (1), pour que ce même ouvrant (2) puisse être déplacé dans les configurations d'ouverture ou de fermeture, l'unité de commande comprenant une tige unique (11) qui s'étend essentiellement sur la hauteur (H) de l'ouvrant (2), cette même tige pouvant être insérée dans le canal (4) et définissant les moyens (8) susmentionnés de transmission du mouvement de coulissement, les moyens d'entraînement (6) comprenant une paire de premières saillies (6a, 6b), réciproquement opposées, définies par des portions de la surface de la tige unique (11) et définissant des éléments qui interceptent, dans les deux sens, un levier de manoeuvre (13) de la poignée (7), et la tige unique (11) présentant, au moins à une extrémité, un amincissement (14) de sa section destiné à définir une liaison pour la rotation de l'ouvrant (2) dans une configuration d'ouverture « à soufflet » et faisant partie des éléments de manoeuvre (10).

2. L'unité selon la revendication 1, **caractérisée en ce que** la tige unique (11) est pourvue de moyens (12) destinés à relier l'ouvrant (2) à d'autres éléments de manoeuvre (10).

3. L'unité selon la revendication 1, **caractérisée en ce que**, au moins au niveau de l'extrémité amincie (14), la tige unique (11) présente une seconde saillie (15) réalisée sur une portion de la surface de cette même tige unique (11), destinée à définir un élément de contact lorsque l'ouvrant (2) est dans une configuration d'ouverture « à soufflet » et constituant un des éléments de manoeuvre (10).

4. L'unité selon les revendications de 1 à 3, **caractérisée en ce que** la tige unique (11) comporte au moins un premier trou (16) réalisé au niveau de l'extrémité opposée à l'amincissement (14) et définissant les moyens (12) de liaison de l'ouvrant (2) à d'autres éléments de manoeuvre (10), qui comprennent un premier pivot de liaison (17).

5. L'unité selon les revendications de 1 à 4, **caractérisée en ce que** la tige unique (11) comporte un deuxième trou (18) situé entre la seconde saillie (15) et l'extrémité amincie (14) et destiné à permettre l'insertion d'un deuxième pivot (19) qui constitue un des éléments de liaison (9) sur la tige unique (11).

6. L'unité selon les revendications de 1 à 5, **caractérisée en ce que** la tige unique (11) comporte un troisième trou (20) situé à proximité de la paire de premières saillies (6a, 6b) et destiné à permettre l'insertion d'un troisième pivot (21) qui constitue un autre élément de liaison (9) sur la tige unique (11).

7. Un procédé de fabrication d'une unité de commande pour cadres de fenêtre oscillo-battante du type comprenant un dormant (1) et un ouvrant (2) de hauteur (H) ; l'unité de commande (3) comprenant, coulissant dans un canal (4) réalisé dans un des montants (5) du profilé formant l'ouvrant (2), des moyens d'entraînement (6) qui peuvent être associés à une poignée de commande (7) montée sur l'ouvrant (2), et des moyens (8) destinés à transmettre, par le biais d'un mouvement de la poignée (7), un mouvement de coulissement dans les deux sens et le long du canal (4) des moyens d'entraînement (6) ; les moyens de transmission (8) étant associés aux moyens d'entraînement (6) et, respectivement, à des éléments de liaison (9) et/ou des éléments (10) de manoeuvre de l'ouvrant (2) par rapport au dormant (1), pour que ce même ouvrant (2) puisse être déplacé dans les configurations d'ouverture ou de fermeture, le procédé en question comprenant les phases suivantes, qui peuvent être simultanées ou se suivrent :
- alimenter, dans une direction opérationnelle (L), un profilé (P) ayant une section pouvant être emboîtée de façon complémentaire dans le canal (4) ;
- effectuer une pluralité d'opérations d'usinage sur le profilé (P) en utilisant des moyens (30) destinés à exécuter une série de fonctions dans la forme et/ou le profil du profilé (P) lui-même pour former au moins les moyens d'entraînement (6) et une partie des éléments de manoeuvre (10) ;
- couper, à partir du profilé (P), une portion comprenant les fonctions susmentionnées, qui constitue la tige unique (11) dont la longueur est essentiellement égale à la hauteur (H) de l'ouvrant (2) ; la phase d'usinage comprenant une opération consistant à couper la surface du profilé (P) pour obtenir une paire de premières saillies (6a, 6b), réciproquement opposées, qui constituent les moyens d'entraînement (6), et une opération consistant à couper une extrémité du profilé (P), destinée à définir un amincissement (14) et à constituer un des éléments de manoeuvre (10).

8. Le procédé selon la revendication 7, **caractérisé en ce que** la phase d'usinage de la tige unique (11) comprend au moins une opération de perçage afin de réaliser au moins un logement (16) de liaison pour un autre élément de manoeuvre (10).

9. Le procédé selon la revendication 7, **caractérisé en ce que** la phase d'usinage comprend une opération consistant à couper la surface du profilé (P) afin de réaliser une seconde saillie (15) qui constitue un des éléments de manoeuvre (10).

10. Le procédé selon les revendications 7 et 8, **caractérisé en ce que** la phase d'usinage comprend une autre opération de perçage afin de réaliser au moins un logement (18) prévu pour l'insertion d'un élément de contact ou pivot (19) qui peut être associé à la tige unique (11).

11. Le procédé selon les revendications 7 et 8, **caractérisé en ce que** la phase d'usinage comprend une autre opération de perçage afin de réaliser au moins un logement (20) prévu pour l'insertion d'un élément de contact ou pivot (21) qui peut être associé à la tige unique (11).

12. Une machine pour fabriquer une unité de commande pour cadres de fenêtre oscillo-battante du type comprenant un dormant (1) et un ouvrant (2) de hauteur (H) ; l'unité de commande (3) comprenant, coulissant dans un canal (4) réalisé dans un des montants (5) du profilé formant l'ouvrant (2), des moyens d'entraînement (6) qui peuvent être associés à une poignée de commande (7) montée sur l'ouvrant (2), et des moyens (8) destinés à transmettre, par le biais d'un mouvement de la poignée (7), un mouvement de coulissement dans les deux sens et le long du canal (4) des moyens d'entraînement (6) ; les moyens de transmission (8) étant associés aux moyens d'entraînement (6) et, respectivement, à des éléments de liaison (9) et/ou des éléments (10) de manoeuvre de l'ouvrant (2) par rapport au dormant (1), pour que ce même ouvrant (2) puisse être déplacé dans les configurations d'ouverture ou de fermeture, la machine en question comprenant :
- une première station (31), pour alimenter un profilé (P) dans une direction opérationnelle (L) ;
- une seconde station (32) pour usiner le profilé (P), équipée d'une pluralité de groupes d'usinage (30) ;
- une unité (33) de commande de la station d'alimentation (31) et des groupes d'usinage (30), destinée à activer ces mêmes groupes d'usinage (30) en fonction de la longueur finale de la tige unique (11) obtenue à partir du profilé, du type d'usinage à effectuer et de l'avancement du profilé (P) dans la seconde station (32) ; ladite machine étant **caractérisée en ce que** les groupes d'usinage (30) sont situés au-dessus du profilé (P) alimenté, disposés l'un à la suite de l'autre et destinés à permettre des opérations simultanées ou successives pour exécuter une série de fonctions dans la forme et/ou le profil du profilé (P) afin de réaliser les moyens d'entraînement (6), sous forme d'une paire de premières saillies (6a, 6b) réciproquement opposées, et une partie des éléments de manoeuvre (10), sous forme d'un amincissement (14) de la section d'au moins une extrémité de la tige unique, et afin de couper le profilé (P) à la mesure voulue pour constituer la tige unique (11) pourvue des moyens d'entraînement (6) et de la partie des éléments de manoeuvre (10) en question.

13. La machine selon la revendication 12, **caractérisée en ce que** la première station (31) comprend un canal (34) d'alimentation du profilé (P) et un groupe (35) destiné au prélèvement bilatéral et à l'avancement du profilé (P), ce groupe étant relié à l'unité de commande (33).

14. La machine selon la revendication 12, **caractérisée en ce que** le groupe (35) de prélèvement bilatéral est constitué par une paire de rouleaux (35a, 35b), réciproquement opposés et situés de chaque côté du profilé (P) ; au moins un des rouleaux (35a, 35b) étant motorisé et relié à un organe de comptage (36) asservi à l'unité de commande (33).

15. La machine selon la revendication 12, **caractérisée en ce que** la seconde station (32) prévue pour l'usinage du profilé (P) comprend un châssis (37) de support des groupes d'usinage (30) ; le châssis (37) étant asservi à des moyens (38) qui le déplacent entre une position non opérationnelle, dans laquelle les groupes (30) sont éloignés du profilé (P), et une position opérationnelle, dans laquelle les groupes (30) sont à proximité du profilé (P) ; un élément d'activation (39), asservi à l'unité de commande (33), étant prévu entre le châssis (37) et chacun des groupes (30), tel élément d'activation étant à même de permettre au groupe d'usinage (30) correspondant d'effectuer une autre course opérationnelle afin de venir au contact du profilé (P) quand le châssis (37) est dans la position opérationnelle.

16. La machine selon la revendication 15, **caractérisée en ce que** l'élément d'activation (39) de chaque groupe d'usinage (30) est de type magnétique.

17. La machine selon les revendications de 12 à 15, **caractérisée en ce que** la seconde station (32) comprend une base de support (40), opposée aux groupes d'usinage (30), constituée par une piste (41) de support du profilé (P) ; la piste étant destinée à définir un élément s'opposant aux groupes d'usinage (30).

18. La machine selon la revendication 12, **caractérisée en ce que** chacun des groupes d'usinage (30) est constitué par une tête de coupe (42), conformée de manière à exécuter une fonction dans la forme et/ou le profil du profilé (P) ou à couper le profilé lui-même.
